# FASCICULE DE BREVET EUROPEEN

(11) **EP 1 112 658 B1**
(45) Date de publication et mention de la délivrance du brevet: **07.05.2003**
(21) Numéro de dépôt: 99942958.2
(22) Date de dépôt: 13.09.1999
(51) Int. Cl.: H04N 7/167, G07F 7/10

(54) **DECODEUR DE SYSTEME A ACCES CONDITIONNEL ET PROCEDE DE CHARGEMENT DE DROITS D'UTILISATEURS DANS UN TEL DECODEUR**
DEKODER FÜR EIN SYSTEM MIT BEDINGTEM ZUGANG UND VERFAHREN ZUM LADEN VON BENUTZERRECHTEN IN EINEM SOLCHEN SYSTEM
CONDITIONAL ACCESS SYSTEM DECODER AND ENTITLEMENT MANAGEMENT METHOD IN SAME

(30) Priorité: 11.09.1998 FR 9811327
(43) Date de publication de la demande: 04.07.2001
(73) Titulaire: THOMSON multimedia, 92100 Boulogne Billancourt (FR)
(72) Inventeur: GAUCHE, Laurent, Thomson multimedia, 92648 Boulogne Cedex (FR)
(74) Mandataire: Kohrs, Martin
(86) Numéro de dépôt international: FR9902174
(87) Numéro de publication internationale: WO00016557

(56) Documents cités:
- EP-A- 0 723 371
- EP-A- 0 817 485
- WO-A-96/06504
- WO-A-98/09257
- US-A- 5 619 501
- SCHOONEVELD VAN D: "STANDARDIZATION OF CONDITIONAL ACCESS SYSTEMS FOR DIGITAL PAY TELEVISION" PHILIPS JOURNAL OF RESEARCH, vol. 50, no. 1/02, 1 juillet 1996 (1996-07-01), pages 217-225, XP000627672
- COUTROT F ET AL: "A SINGLE CONDITIONAL ACCESS SYSTEM FOR SATELLITE-CABLE AND TERRESTRIAL TV" IEEE TRANSACTIONS ON CONSUMER ELECTRONICS, vol. 35, no. 3, 1 août 1989 (1989-08-01), pages 464-468, XP000065971

## Description

La présente invention concerne un décodeur de système à accès conditionnel et, plus particulièrement, un procédé de chargement des droits qu'un utilisateur peut acquérir pour accéder à un service distribué au sein d'un système à accès conditionnel.

Un système à accès conditionnel permet à un prestataire de services de ne fournir ses services qu'aux seuls utilisateurs ayant acquis des droits sur ces services. C'est le cas, par exemple, des systèmes de télévision à péage.

Comme cela est connu de l'homme de l'art, le service fourni par un prestataire de services est constitué d'une information embrouillée par des mots de contrôle. Afin de désembrouiller l'information, le prestataire de services fournit à chaque utilisateur les mots de contrôle qui ont servi à embrouiller l'information. De façon à garder secrets les mots de contrôle, ceux-ci sont fournis après avoir été chiffrés avec un algorithme de clé K. Les différents mots de contrôle chiffrés sont envoyés aux différents utilisateurs dans des messages de contrôle communément notés ECM (l'abréviation ECM provient de l'anglais "Entitlement Control Message"). Les mots de contrôle sont déchiffrés dans un processeur sécurisé contenu dans un élément de sécurité tel que, par exemple, une carte à puce.

L'information embrouillée ne peut être désembrouillée, et donc lue par un utilisateur, qu'à hauteur des droits attribués à cet utilisateur. Les droits de chaque utilisateur sont envoyés dans des messages de gestion des droits communément notés EMM (l'abréviation EMM est issue de l'anglais "Entitlement Management Message"). Le processeur sécurisé permet de valider et d'enregistrer les droits qu'a l'utilisateur sur le service délivré.

Selon un exemple de réalisation connu de système à accès conditionnel, le prestataire de services fournit à chaque utilisateur une carte à puce et un décodeur. La sélection des messages EMM s'effectue par la mise en place d'une configuration appropriée de filtres contenus dans le décodeur. Cette configuration est mise en place à partir de la lecture, par des circuits du décodeur, de données contenues dans la carte à puce. A cette fin, l'utilisateur est amené à introduire la carte à puce dans le décodeur.

Quand les messages EMM qui correspondent à la carte à puce sont présents dans le signal que reçoit le décodeur, ils sont sélectionnés à l'aide des filtres et transférés vers la carte à puce où les droits correspondants sont mis à jour et mémorisés.

Les messages EMM sont émis, de façon asynchrone, avant l'émission du service embrouillé auquel ils correspondent. Les droits utilisateur sont ainsi, par exemple, très souvent émis aux heures les plus creuses de la nuit. Par ailleurs, les droits utilisateur sont amenés à être fréquemment renouvelés sans que l'utilisateur en ait la connaissance.

Il s'ensuit qu'un utilisateur qui désire pouvoir utiliser régulièrement les services d'un prestataire se trouve pratiquement dans l'obligation de laisser en permanence la carte à puce que lui a fourni le prestataire dans le décodeur pour que le transfert des messages EMM du décodeur vers la carte à puce puisse être effectué dès que possible.

Un utilisateur qui est abonné à plusieurs prestataires de services possède autant de cartes à puce qu'il a d'abonnements. Au cas où les différents prestataires de services partagent le même décodeur, on peut envisager de prévoir plusieurs lecteurs de cartes à puces différents sur le même décodeur mais dans ce cas, cela augmente notablement le prix du décodeur. Dans le cas plus probable où l'utilisateur possède plus de cartes à puces que de lecteurs de cartes disponibles sur son décodeur, il lui est alors quasiment impossible de gérer correctement son parc de cartes à puce pour acquérir dès que possible l'ensemble des droits auxquels il peut prétendre.

L'invention vise à résoudre les problèmes précités.

Elle concerne à cet effet un décodeur de système à accès conditionnel comprenant :
- au moins un dispositif destiné à lire et/ou à écrire des données dans un élément de sécurité détachable fourni par un prestataire de service;
- des filtres destinés à sélectionner au moins un message de gestion des droits qu'un utilisateur possède sur un service fourni par le prestataire parmi un flot de données reçu; et
- un module de contrôle d'accès qui est capable de recevoir un paramètre d'identification contenu dans un élément de sécurité inséré dans le décodeur; de mettre en place une configuration de filtre en fonction du paramètre d'identification reçu de façon à sélectionner un message de gestion des droits destiné à cet élément de sécurité inséré; et de transmettre ledit message audit élément de sécurité inséré.

Selon l'invention, le décodeur comporte en outre un module de mémorisation des droits qui est capable de mémoriser la configuration de filtres mise en place par le module de contrôle d'accès précité; de remettre en place, suite à l'effacement de la configuration de filtres consécutive au retrait de l'élément de sécurité, la configuration de filtres mémorisée appropriée audit élément de sécurité, de façon à sélectionner un message de gestion des droits destiné audit élément de sécurité lorsque ce dernier est retiré; et de mémoriser ledit message dans une mémoire du décodeur.

Selon un autre aspect de l'invention, le module de mémorisation des droits du décodeur est en outre capable de détecter l'insertion d'un élément de sécurité dans le décodeur; de vérifier si un message de gestion des droits destiné audit élément de sécurité inséré est mémorisé dans la mémoire du décodeur; et en cas de vérification positive, de transférer ledit message mémorisé audit élément de sécurité inséré.

Selon un mode de réalisation préféré de l'invention, le module de mémorisation des droits détecte l'insertion d'un élément de sécurité dans le décodeur en enregistrant toute nouvelle mise en place de configuration de filtres par le module de contrôle d'accès.

L'invention concerne également un procédé de traitement de message de gestion des droits qu'un utilisateur possède sur un service, ledit procédé comprenant les étapes consistant à :
- insérer un élément de sécurité détachable dans un décodeur;
- récupérer dans ledit élément de sécurité un paramètre d'identification;
- mettre en place une configuration de filtre du décodeur en fonction dudit paramètre d'identification de façon à sélectionner un message de gestion des droits destiné audit élément de sécurité inséré;
- transmettre ledit message audit élément de sécurité inséré.

Selon l'invention, l'étape de mise en place de la configuration de filtre appropriée audit élément de sécurité est suivie d'une étape de mémorisation de ladite configuration et, lorsque ledit élément de sécurité est retiré du décodeur, provoquant l'effacement de ladite configuration de filtres, la configuration de filtres appropriée à l'élément de sécurité retiré est remise en place à partir de la configuration mémorisée lors de l'étape de mémorisation de façon à sélectionner un message de gestion des droits destiné audit élément de sécurité retiré.

Selon un aspect préféré de l'invention, le procédé comporte une étape supplémentaire consistant à mémoriser dans une mémoire du décodeur le message de gestion des droits destiné à l'élément de sécurité retiré lorsqu'un tel message est sélectionné.

Selon un autre aspect de l'invention, le procédé comporte en outre les étapes consistant à :
- réinsérer l'élément de sécurité dans le décodeur;
- vérifier si un message de gestion des droits destiné audit élément de sécurité inséré est mémorisé dans la mémoire du décodeur; et
- en cas de vérification positive, transférer ledit message mémorisé audit élément de sécurité inséré.

Un avantage de l'invention est de permettre l'acquisition de droits utilisateur sans que l'élément de sécurité qui contient les données pour mettre en place la configuration de filtres permettant l'acquisition de ces droits ne soit présent dans le décodeur au moment de l'acquisition.

D'autres caractéristiques et avantages de l'invention apparaîtront à la lecture d'un mode de réalisation particulier, non limitatif, de l'invention fait en référence aux figures 1 à 4, parmi lesquelles:
- la figure 1 représente un décodeur muni d'un élément de sécurité selon l'invention;
- la figure 2 représente schématiquement un paquet de données transportant un message de gestion des droits d'un utilisateur;
- la figure 3 représente schématiquement les différents évènements et les différents transferts de données intervenant durant le procédé de traitement des messages de gestion des droits utilisateur selon l'invention;
- les figures 4a à 4e illustrent différentes étapes du procédé selon l'invention.

Sur toutes les figures, les mêmes références désignent les mêmes éléments.

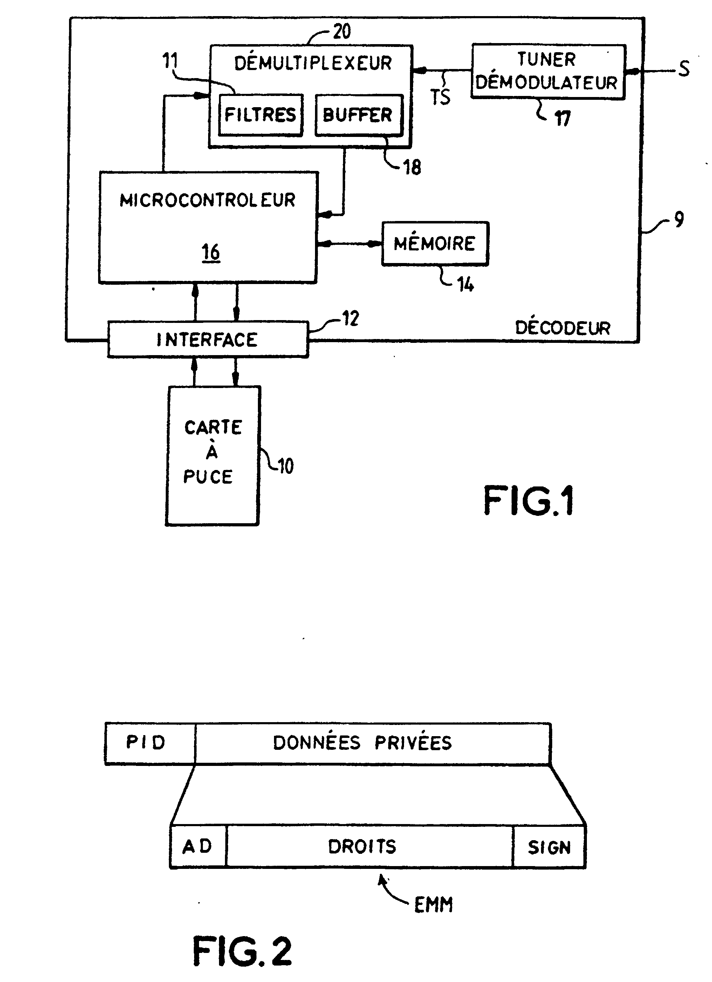

La figure 1 représente un décodeur de système à accès conditionnel permettant à un utilisateur chez qui il est installé de recevoir des services, tels que des programmes télévisés, sous forme de flux d'information numérique codé par exemple selon la norme MPEG 2 (ISO/IEC 13818-1).

Seuls les éléments nécessaires à la compréhension de l'invention ont été représentés à la figure 1.

Le décodeur comporte de manière connue en soi un tuner/démodulateur 17 qui reçoit un signal S, issu d'une antenne satellite ou d'un réseau câblé, et qui fournit en sortie un flux de données numériques, transmis sous forme de paquets, appelé TS (de l'anglais "Transport Stream" signifiant "flux de transport") dans la norme MPEG 2 précitée, et contenant les services fournis par des prestataires.

Les services étant transmis sous forme embrouillée, chaque prestataire de service fournit également à l'utilisateur une carte à puce 10 qui contient des éléments secrets permettant de désembrouiller les services.

Cette carte à puce 10 est destiné à être insérée dans un lecteur de carte à puce du décodeur dont on a représenté uniquement l'interface 12 avec un microcontrôleur 16 dans lequel sont exécutés les différentes applications du décodeur.

Le décodeur comporte également une mémoire 14 à laquelle le microcontrôleur 16 peut accéder en lecture ou en écriture.

Enfin, le décodeur comprend un composant 20 appelé démultiplexeur qui reçoit le flux de données TS pour en extraire les paquets de données vidéo ou audio correspondant à un service que l'utilisateur désire visualiser ou pour en extraire des paquets de données contenant des informations dites "de service", telles que des messages EMM de gestion des droits utilisateur.

Le démultiplexeur 20 est composé de filtres 11 et d'une mémoire tampon 18, appelée généralement "buffer".

Les filtres sont formés, comme cela est connu de l'homme de l'art, d'ensembles de comparateurs recevant d'une part le flux de données TS et d'autre part une valeur de référence permettant d'identifier les paquets de données à extraire. Lorsque des paquets de données sont extraits du flux TS, ceux-ci sont stockés dans le buffer 18 avant d'être utilisés par les différentes applications du décodeur qui sont exécutées dans le microcontrôleur 16.

A la figure 2, on a représenté un paquet de données contenant un message EMM de gestion des droits utilisateur. Comme tout paquet de données transporté dans le flux TS, il comporte un identifiant : le PID (de l'anglais "Packet IDentifier"), suivi de données dites "privées". En effet, toutes les données concernant le contrôle d'accès sont spécifiques au prestataire de service et ne sont pas définies dans la norme de transport des paquets de données.

Dans les données privées se trouve le message EMM proprement dit. Ce message se compose de trois éléments :
- un premier élément AD contenant l'adresse de la carte à puce à laquelle est destiné le message EMM; il peut également s'agir d'une adresse correspondant à un groupe de cartes à puces auxquelles est destiné le message EMM;
- un second élément contenant les droits de l'utilisateur (abonnement, jetons pour un achat impulsif de programme, etc...); et
- un troisième élément SIGN permettant de valider le contenu du message EMM qui ne sera pas décrit plus avant.

Lorsqu'un message EMM destiné à la carte à puce 10 qui est insérée dans le décodeur doit être extrait du flux de données TS, il est donc nécessaire de configurer un filtre en lui fournissant comme valeur de référence le PID des paquets de données transportant les messages EMM et l'adresse de la carte à puce qui se trouve dans le décodeur.

Dans la suite, on dira que l'on "met en place" ou que l'on "pose" une configuration de filtre pour signifier que l'on transmet à un filtre les paramètres précités (PID, adresse carte à puce) permettant de sélectionner un message EMM destiné à une carte à puce donnée.

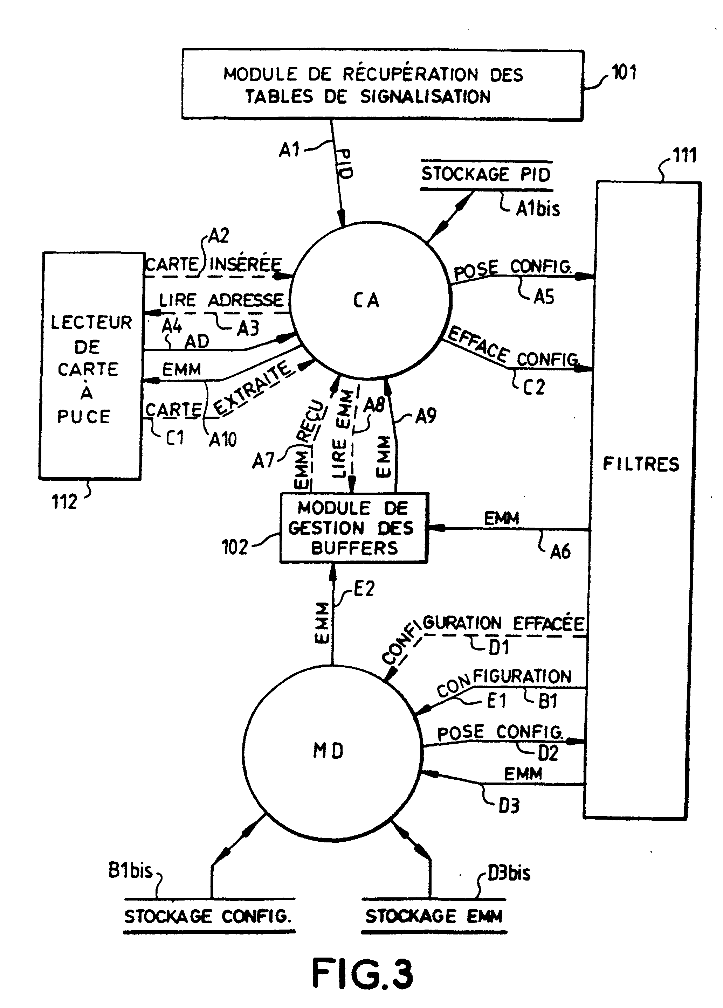

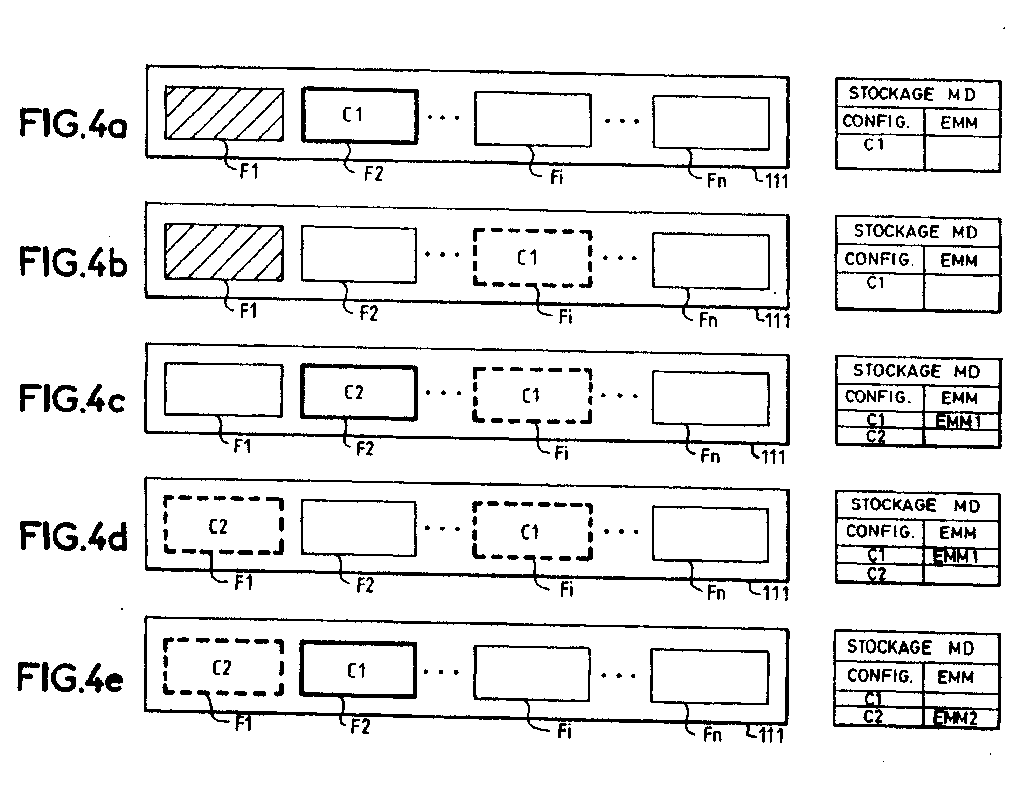

Nous allons maintenant décrire plus en détail, en liaison avec les figures 3 et 4, le mécanisme de récupération des messages EMM destinés à une carte à puce donnée dans le flux TS reçu.

Sur la figure 3, nous avons représenté sous forme de rectangles les différentes ressources, partagées par toutes les applications du décodeur, qui sont utiles à la compréhension de l'invention. Ces ressources partagées comprennent:
- des filtres 111, qui correspondent aux filtres 11 de la figure 1;
- un module lecteur de carte à puce 112 qui comprend à la fois une partie matérielle (le circuit de lecture/écriture sur la puce - ou circuit intégré - de la carte) et une partie logicielle permettant de communiquer avec les autre applications du décodeur,
- un module dit de récupération des tables de signalisation 101 qui est un logiciel capable d'extraire du flux TS des tables contenant des informations sur la structure et le positionnement des paquets de données dans le flux TS. Notamment, ce module est capable d'extraire une table appelée CAT (de l'anglais "Conditional Access Table" signifiant littéralement "table d'accès conditionnel") dans la norme MPEG 2 précitée et qui contient, entre autres, les PID identifiant les paquets de données contenant les messages EMM;
- un module de gestion des buffers 102 qui est un logiciel bas niveaux chargé d'allouer et de manipuler les buffers utilisés pour le stockage des paquets qui sont extraits du flux de données TS par les filtres 111.

Les différentes ressources qui viennent d'être décrites sont utilisées par des applications (des logiciels) qui sont représentées par des cercles à la figure 3. Enfin, sur la figure 3, on a représenté les flux de données par des flèches continues et les événements par des flèches en pointillés.

Nous nous intéresserons dans la suite uniquement aux applications qui sont utiles au chargement des droits utilisateur dans le cadre de l'invention.

La première application, le module CA est un logiciel spécifique à un prestataire de service et qui implémente le système d'accès conditionnel de ce prestataire. En effet, il est très rare que deux prestataires de services différents utilisent le même système d'accès conditionnel. En général, le module CA est donc un logiciel secret, qui n'est connu que du prestataire de service. Le fabriquant de décodeur le reçoit sous forme de "code objet" (logiciel compilé non compréhensible - par opposition au "code source" - et non modifiable tel quel) pour être intégré au décodeur.

La deuxième application, appelée module de mémorisation des droits MD, est, selon l'invention, un module applicatif indépendant du module CA avec lequel il ne communique pas directement. Le rôle de ce module MD est, comme on le verra ci-dessous, "d'espionner" les configurations de filtres mises en place par le module CA pour être ensuite capable de recevoir des messages EMM destinés à une carte à puce qui a été extraite du décodeur à la place du module CA.

Nous allons maintenant décrire plus précisément les différentes étapes conduisant au chargement des droits de l'utilisateur sur sa carte à puce.

Lorsque l'utilisateur du décodeur sélectionne un service particulier, par exemple une chaîne télévisée, le module de récupération des tables de signalisation 101 récupère la table CAT décrite ci-dessus et le module CA récupère dans cette table (étape A1, Fig. 3) le PID identifiant les paquets de données dans lesquels sont transmis les messages EMM pour le prestataire fournissant le service sélectionné. Le PID est ensuite stocké par le module CA dans la mémoire 14 du décodeur (étape "STOCKAGE PID" A1bis).

Si nous supposons qu'une carte à puce No. 1 est insérée dans le décodeur, alors le module lecteur de carte 112 génère un événement "CARTE INSEREE" à l'étape A2. A la réception de cet événement, le module CA génère un événement "LIRE ADRESSE" à l'étape A3 et obtient, en réponse du module lecteur de carte 112, l'adresse de la carte à puce à l'étape A4.

A l'aide de cette adresse et du PID stocké, le module CA peut mettre en place une configuration de filtres C1 pour sélectionner les messages EMM destinés à la carte à puce No. 1 (étape A5 "POSE CONFIG.").

En se reportant maintenant à la figure 4a, on a représenté l'ensemble 111 des filtres F1 à Fn disponibles pour les différentes applications du décodeur. On suppose que le filtre F1 est alloué à une autre application, il est donc représenté de manière hachurée à la figure 4a. Le premier filtre disponible est le filtre F2. Celui-ci est alloué au module CA qui met donc en place la configuration C1 dans F2.

En revenant à la figure 3, on suppose maintenant qu'un paquet contenant un message EMM a été sélectionné par le filtre F2 qui le transmet (étape A6) au module de gestion des buffers 102, lequel génère un événement "EMM RECU" à l'attention du module CA (étape A7) qui répond par un événement "LIRE EMM" (étape A8) avant de recevoir le message EMM correspondant (étape A9). Le module CA transmet enfin le message EMM au module lecteur de carte 112 (étape A10) pour que ce dernier le transfère à la carte à puce No. 1 pour traitement (mise à jour des droits de l'utilisateur mémorisés dans la carte). Les étapes A6 à A10 sont répétées autant de fois que des messages EMM destinés à la carte à puce No. 1 sont reçus par le filtre F2.

En considérant maintenant le module MD de l'invention, celui-ci surveille en permanence les configurations de filtres qui sont mises en place par le module CA et, dès qu'une nouvelle configuration est posée, comme à l'étape A5 précitée, le module MD récupère cette configuration (étape B1) pour la mémoriser (étape "STOCKAGE CONFIG." B1bis). A la figure 4a, on se trouve à la fin de cette dernière étape et on constate que la configuration C1 mise en place par le module CA a été mémorisée par le module MD (voir tableau "STOCKAGE MD", colonne "CONFIG.").

Supposons maintenant que l'utilisateur retire la carte à puce No. 1. Un événement "CARTE EXTRAITE" est alors généré par le module lecteur de carte 112 (étape C1). A la réception de cet événement, le module CA efface la configuration de filtre C1 correspondant à la carte retirée (étape C2). Le filtre F2 est donc libéré (Figure 4b).

Le module MD qui surveille les filtres 111 reçoit alors un événement "CONFIGURATION EFFACEE" (étape D1) et remet aussitôt en place (étape D2) ladite configuration C1 qui avait été mémorisée à l'étape B1bis précédente. A la figure 4b, on a ainsi représenté l'état des filtres à l'issue de cette étape D2: le filtre F1 est toujours alloué à une autre application du décodeur; le filtre F2 a été libéré par le module CA et le filtre Fi a été alloué au module MD pour mettre en place la configuration C1.

On notera pour la suite que lorsqu'un filtre est alloué au module CA, il est représenté sur les figures 4a à 4e par un rectangle en traits gras continus, alors que lorsqu'un filtre est alloué au module MD, il est représenté par un rectangle en traits gras pointillés.

Grâce au module MD de l'invention, les messages EMM destinés à la carte à puce No. 1 peuvent donc encore être sélectionnés dans le flux de données TS par le filtre Fi malgré l'absence de ladite carte dans le décodeur. Lorsqu'un tel message EMM destiné à la carte No. 1 est sélectionné, il est transmis au module MD (étape D3) pour être mémorisé dans une mémoire du décodeur (étape "STOCKAGE EMM" D3bis). Avantageusement, les messages EMM sont mémorisés dans une zone de mémoire tampon temporaire de la mémoire 14 du décodeur.

En se reportant à la figure 4c, on suppose qu'une carte à puce No. 2 est insérée dans le décodeur. Le filtre F2 est donc alloué au module CA pour mettre en place une configuration C2 permettant de sélectionner des messages EMM destinés à la carte No. 2. Cette configuration C2 est aussitôt mémorisée par le module MD (voir tableau "STOCKAGE MD", colonne "CONFIG."). En parallèle, le filtre Fi reste alloué au module MD avec la configuration C1 pour récupérer les messages EMM destinés à la carte à puce No. 1 qui a été extraite. On suppose qu'à la fin de cette étape, un message EMM1 destiné à la carte No. 1 a été mémorisé par le module MD (voir colonne "EMM" du tableau "STOCKAGE MD").

A la figure 4d, on suppose que la carte No. 2 a été extraite, le filtre F2 est donc à nouveau libéré et le filtre F1 qui se trouvait libre a été alloué au module MD pour mettre en place la configuration C2 mémorisée précédemment. Le filtre Fi reste quant à lui toujours alloué au module MD avec la configuration C1.

Supposons maintenant que l'utilisateur réinsère sa carte à puce No. 1 dans le décodeur. Les étapes A2 à A5 décrites précédemment sont alors exécutées et un filtre, par exemple le filtre F2 (Figure 4e), est alloué au module CA avec la configuration C1. Le module MD, qui surveille en permanence les configurations de filtres mises en place par le module CA, reçoit cette configuration C1 (étape E1) et la compare avec celles déjà mémorisées (C1, C2). Comme cette configuration C1 est déjà mémorisée, le module MD vérifie ensuite si des messages EMM destinés à la carte à puce No. 1 correspondante sont mémorisés et il trouve le message EMM1.

Le message EMM1 est alors transmis au module de gestion des buffers 102 (étape E2) comme s'il parvenait directement des filtres 111 (comme lors de l'étape A6). Les étapes A7 à A10 sont alors rejouées et tout se passe, du point de vue du module CA, comme si le message EMM1 reçu venait d'être sélectionné par le filtre F2 dans le flux de données TS.

Ainsi, grâce à l'invention, la mise à jour des droits de l'utilisateur pour la carte No. 1 est faite même si les nouveaux droits ont été reçus alors que la carte ne se trouvait pas insérée dans le décodeur. En outre, un avantage important du module MD de l'invention est qu'il intervient sur les différentes ressources du décodeur sans jamais interagir directement avec le module CA. Le logiciel du module CA n'a donc pas à être modifié par rapport aux décodeurs de l'art antérieur.

Lorsque le message EMM1 est transmis au module de gestion des buffers 102 par le module MD, ce dernier libère en même temps l'espace mémoire réservé pour mémoriser le message EMM1 (voir colonne "EMM" du tableau "STOCKAGE MD", Fig. 4e). A la figure 4e, on retrouve en outre le filtre F1 qui est alloué au module MD avec la configuration C2 et on suppose qu'un message EMM2 destiné à la carte à puce No. 2 a été reçu et mémorisé (voir colonne "EMM" du tableau précité).

En ce qui concerne la stratégie de libération des filtres, celle-ci dépend de l'implémentation choisie par le développeur du décodeur. Par exemple, on peut choisir comme à la figure 4e de libérer le filtre Fi (qui était auparavant alloué au module MD avec la configuration C1) dès qu'un autre filtre (ici F2) est alloué avec la même configuration que Fi.

La description du mode de réalisation préféré de l'invention a été faite en utilisant l'exemple de la norme de transport de paquets de données numérique MPEG 2 mais l'invention s'applique naturellement dans le cadre de toute autre norme de transport de données.

## Revendications

1. Décodeur (9) de système à accès conditionnel comprenant :
- au moins un dispositif (12, 112) destiné à lire et/ou à écrire des données dans un élément de sécurité détachable (10) fourni par un prestataire de service;
- des filtres (11, 111) destinés à sélectionner au moins un message (EMM) de gestion des droits qu'un utilisateur possède sur un service fourni par ledit prestataire parmi un flot de données (TS) reçu;
- un module de contrôle d'accès (CA) capable de :
a) recevoir un paramètre d'identification (AD) contenu dans ledit élément de sécurité (10) inséré dans ledit décodeur;
b) mettre en place une configuration (C1, C2) de filtre en fonction du paramètre d'identification (AD) reçu de façon à sélectionner un premier message de gestion des droits (EMM) destiné audit élément de sécurité (10) inséré; et
c) transmettre ledit premier message (EMM) audit élément de sécurité inséré;
**caractérisé en ce qu'**il comporte en outre :
- un module de mémorisation des droits (MD) capable de :
i) mémoriser ladite configuration de filtres (C1, C2) mise en place par le module de contrôle d'accès (CA);
ii) remettre en place, suite à l'effacement de la configuration de filtres consécutive au retrait dudit élément de sécurité, la configuration de filtres mémorisée appropriée audit élément de sécurité, de façon à sélectionner un second message de gestion des droits (EMM) destiné audit élément de sécurité lorsque ce dernier est retiré; et
iii) mémoriser ledit second message (EMM) dans une mémoire (14) dudit décodeur.

2. Décodeur selon la revendication 1, dans lequel le module de mémorisation des droits (MD) est en outre capable de :
iv) détecter l'insertion d'un élément de sécurité dans ledit décodeur;
v) vérifier si un message de gestion des droits (EMM) destiné audit élément de sécurité inséré est mémorisé dans la mémoire (14) du décodeur; et
vi) en cas de vérification positive, transmettre ledit message (EMM) mémorisé audit élément de sécurité inséré.

3. Décodeur selon la revendication 2, dans lequel le module de mémorisation des droits (MD) détecte l'insertion d'un élément de sécurité (10) dans le décodeur en enregistrant toute nouvelle mise en place de configuration de filtres par le module de contrôle d'accès (CA).

4. Décodeur selon l'une des revendications 1 à 3, dans lequel l'élément de sécurité détachable (10) est une carte à puce.

5. Décodeur selon la revendication 4, dans lequel le paramètre d'identification (AD) contenu dans l'élément de sécurité est l'adresse de la carte à puce.

6. Procédé de traitement de message (EMM) de gestion des droits qu'un utilisateur possède sur un service, ledit procédé comprenant les étapes consistant à :
- insérer un élément de sécurité détachable (10) dans un décodeur (9);
- récupérer (A3, A4) dans ledit élément de sécurité un paramètre d'identification (AD);
- mettre en place (A5) une configuration de filtre du décodeur en fonction dudit paramètre d'identification (AD) de façon à sélectionner un premier message de gestion des droits (EMM) destiné audit élément de sécurité inséré;
- transmettre (A6-A10) ledit premier message (EMM) audit élément de sécurité inséré,
**caractérisé en ce que** l'étape de mise en place de la configuration de filtre appropriée audit élément de sécurité est suivie d'une étape de mémorisation (B1, B1bis) de ladite configuration et **en ce que**, lorsque ledit élément de sécurité (10) est retiré du décodeur, provoquant l'effacement (C2) de ladite configuration de filtres, la configuration de filtres appropriée à l'élément de sécurité retiré est remise en place (D2) à partir de la configuration mémorisée lors de l'étape de mémorisation de façon à sélectionner un second message de gestion des droits (EMM) destiné audit élément de sécurité retiré.

7. Procédé selon la revendication 6, **caractérisé en ce qu'**il comporte une étape supplémentaire (D3, D3bis) consistant à mémoriser dans une mémoire (14) du décodeur ledit second message de gestion des droits (EMM) destiné audit élément de sécurité retiré lorsqu'un tel message est sélectionné.

8. Procédé selon la revendication 7, **caractérisé en ce qu'**il comporte en outre les étapes consistant à :
- réinsérer ledit élément de sécurité (10) dans le décodeur;
- vérifier si un second message de gestion des droits (EMM) destiné audit élément de sécurité inséré est mémorisé dans la mémoire (14) du décodeur; et
- en cas de vérification positive, transférer ledit second message (EMM) mémorisé audit élément de sécurité inséré.

## Patentansprüche

1. Decoder (9) für ein System mit bedingtem Zugriff mit:
- wenigstens einer Vorrichtung (12, 112) zum Lesen und/oder Schreiben von Daten in einem herausnehmbaren Sicherheitselement (10), das durch einen Serviceanbieter geliefert wird,
- Filtern (11, 111) zur Auswahl wenigstens einer Nachricht (EMM) für die Verwaltung der Berechtigungen, die ein Benutzer für einen durch den Serviceanbieter gelieferten Service hat, aus einem empfangenen Datenstrom (TS),
- einem Modul (CA) für die Steuerung des Zugriffs, das in der Lage ist für:
a) Empfang eines Identifikationsparameters (AD), der in dem in den Decoder eingeführten Sicherheitselement (10) enthalten ist,
b) Installation einer Filterkonfiguration (C1, C2) in Abhängigkeit von dem empfangenen Identifikationsparameter (AD), derart, um eine erste Verwaltungsnachricht (EMM) zu wählen, die für das eingeführte Sicherheitselement (10) bestimmt ist, und
c) Übertragung der ersten Nachricht (EMM) zu dem eingeführten Sicherheitselement,
**gekennzeichnet durch:**
- ein Modul zur Speicherung der Berechtigungen (MD), das in der Lage ist für:
i) Speicherung der Filterkonfiguration (C1, C2), die **durch** das Modul für die Steuerung des Zugriffs (CA) installiert ist,
ii) Installation, nach dem Löschen der Filterkonfiguration aufgrund einer Herausnahme des Sicherheitselements, der gespeicherten Filterkonfiguration, die für das Sicherheitselement geeignet ist, derart, um eine zweite Nachricht für die Verwaltung der Berechtigungen (EMM) zu wählen, die für das Sicherheitselement vorgesehen sind, wenn das letztere herausgenommen wird, und
iii) Speicherung der zweiten Nachricht (EMM) in einem Speicher (14) des Decoders.

2. Decoder nach Anspruch 1, in dem das Modul für die Speicherung der Berechtigungen (MD) in der Lage ist für:
iv) Detektierung der Einführung eines Sicherheitselements in den Decoder,
v) Prüfung, ob eine Nachricht für die Verwaltung der BerechtigunGen (EMM) für das Sicherheitselement in dem Speicher (14) des Decoders gespeichert ist, und
vi) wenn das der Fall ist, Übertragung der gespeicherten Nachricht (EMM) zu dem eingeführten Sicherheitselement.

3. Decoder nach Anspruch 2, in dem das Modul für die Speicherung der Berechtigungen (MD) die Einführung eines Sicherheitselements (10) in den Decoder durch Aufzeichnung eines neuen Aufbaus der Filterkonfiguration durch das Modul (CA) für die Zugriffssteuerung detektiert.

4. Decoder nach einem der Ansprüche 1 bis 3, in dem das herausnehmbare Sicherheitselement (10) eine Smart Card ist.

5. Decoder nach Anspruch 4, in dem der in dem Sicherheitselement enthaltenedentifikationsparameter (AD) die Adresse der Smart Card ist.

6. Verfahren zur Verarbeitung einer Nachricht (EMM) für die Verwaltung der Berechtigungen, die ein Benutzer für einen Service besitzt, mit folgenden Schritten:
- Einführung eines herausnehmbaren Sicherheitselement (10) in einen Decoder (9),
- Rückgewinnung (A3, A4) eines Identifikationsparameters (AD) in dem Sicherheitselement,
- Anordnung (A5) einer Filterkonfiguration des Decoders abhängig von dem Identifikationsparameter (AD), derart, dass eine erste Nachricht (EMM) für die Berechtigungsverwaltung (EMM) gewählt wird, die für das eingeführte Sicherheitselement vorgesehen ist,
- Übertragung (A6 - A10) der ersten Nachricht (EMM) zu dem eingeführten Sicherheitselement,
**dadurch gekennzeichnet, dass** auf den Schritt der Anordnung der Filterkonfiguration, die für das Sicherheitselement geeignet ist, ein Schritt zur Speicherung (B1, B1a) der Konfiguration folgt und dass dann, wenn das Sicherheitselement (10) aus dem Decoder herausgenommen wird, die Löschung (C2) der Filterkonfiguration bewirkt wird, dass die Filterkonfiguration, die für das herausgenommene Sicherheitselement geeignet ist, aus der Konfiguration neu angeordnet wird, der während des Speicherschritts derart gespeichert ist, dass eine zweite Nachricht für die Verwaltung der Berechtigungen (EMM) gewählt wird, die für das herausgenommene Sicherheitselement vorgesehen sind.

7. Verfahren nach Anspruch 6, **gekennzeichnet durch** einen zusätzlichen Schritt (D3, D3a) für die Speicherung der zweiten Nachricht für die Berechtigungsverwaltung (EMM) in dem Speicher (14) des Decoders, die für das herausgenommene Sicherheitselement vorgesehen ist, wenn eine derartige Nachricht gewählt wird.

8. Verfahren nach Anspruch 7, **gekennzeichnet durch** folgende zusätzliche Schritte:
- Wiedereinführung des Sicherheitselements (10) in den Decoder,
- Prüfung, ob eine zweite Nachricht für die Berechtigungsverwaltung, die für das eingeführte Sicherheitselement vorgesehen ist, in dem Speicher (14) des Decoders gespeichert ist, und
- wenn das der Fall ist, Übertragung der zweiten gespeicherten Nachricht (EMM) zu dem eingeführten Sicherheitselement.

## Claims

1. Conditional access system decoder (9) comprising:
- at least one device (12, 112) intended to read and/or to write data from/to a detachable security element (10) supplied by a service provider;
- filters (11, 111) intended to select at least one message (EMM) for managing entitlements which a user possesses with regard to a service supplied by the said provider from among a data stream (TS) received;
- an access control module (CA) capable of:
a) receiving an identification parameter (AD) contained in the said security element (10) inserted into the said decoder;
b) installing a filter configuration (C1, C2) as a function of the identification parameter (AD) received in such a way as to select a first entitlement management message (EMM) intended for the said inserted security element (10); and
c) transmitting the said first message (EMM) to the said inserted security element;
**characterized in that** it furthermore comprises:
- a module for storing entitlements (MD) capable of:
i) storing said configuration of filters (C1, C2) which is installed by the access control module (CA);
ii) reinstalling, following the erasure of the configuration of filters consequent upon the removal of the said security element, the stored configuration of filters which is appropriate to the said security element, in such a way as to select a second entitlement management message (EMM) intended for the said security element when the latter is removed; and
iii) storing the said second message (EMM) in a memory (14) of the said decoder.

2. Decoder according to Claim 1, in which the module for storing entitlements (MD) is furthermore capable of:
iv) detecting the insertion of a security element into the said decoder;
v) verifying whether an entitlement management message (EMM) intended for the said inserted security element is stored in the memory (14) of the decoder; and
vi) should verification be positive, transmitting the said stored message (EMM) to the said inserted security element.

3. Decoder according to Claim 2, in which the module for storing entitlements (MD) detects the insertion of a security element (10) into the decoder by recording any new installing of configuration of filters by the access control module (CA).

4. Decoder according to one of Claims 1 to 3, in which the detachable security element (10) is a smart card.

5. Decoder according to Claim 4, in which the identification parameter (AD) contained in the security element is the address of the smart card.

6. Method of processing a message (EMM) for managing entitlements which a user possesses with regard to a service, said method comprising the steps consisting in:
- inserting a detachable security element (10) into a decoder (9);
- recovering (A3, A4) from said security element an identification parameter (AD);
- installing (A5) a configuration of filter of the decoder as a function of the said identification parameter (AD) in such a way as to select a first entitlement management message (EMM) intended for the said inserted security element;
- transmitting (A6-A10) the said first message (EMM) to the said inserted security element,
**characterized in that** the step of installing the configuration of filter which is appropriate to said security element is followed by a step of storing (B1, B1a) the said configuration and **in that**, when the said security element (10) is removed from the decoder, causing the erasure (C2) of the said configuration of filters, the configuration of filters which is appropriate to the removed security element is reinstalled (D2) on the basis of the configuration stored during the storage step in such a way as to select a second entitlement management message (EMM) intended for the said removed security element.

7. Method according to Claim 6, **characterized in that** it comprises an additional step (D3, D3a) consisting in storing in a memory (14) of the decoder the said second entitlement management message (EMM) intended for the said removed security element when such a message is selected.

8. Method according to Claim 7, **characterized in that** it furthermore comprises the steps consisting in:
- reinserting the said security element (10) into the decoder;
- verifying whether a second entitlement management message (EMM) intended for the said inserted security element is stored in the memory (14) of the decoder; and
- should verification be positive, transferring the said second stored message (EMM) to the said inserted security element.
